# EUROPEAN PATENT APPLICATION

(11) **EP 4 667 265 A1**
(43) Date of publication of application: **24.12.2025**
(21) Application number: 23922583.2
(22) Date of filing: 13.02.2023
(51) Int. Cl.: B60K 35/00

(54) **AUTOMOTIVE DISPLAY METHOD AND AUTOMOTIVE DISPLAY DEVICE**

(71) Applicant: Nissan Motor Co., Ltd., Kanagawa 221-0023 (JP)
(72) Inventor: SASANUMA, Yasutomo, Atsugi-shi, Kanagawa 243-0123 (JP); AMARI, Takeyuki, Atsugi-shi, Kanagawa 243-0123 (JP); SENOO, Daisaku, Atsugi-shi, Kanagawa 243-0123 (JP)
(74) Representative: Osha BWB
(86) International application number: PCT/JP2023/004739
(87) International publication number: WO 2024/171242

(57) **Abstract**

The present invention relates to an automotive display device (1) comprising: a first screen (40) disposed in front of a driver's seat; a second screen (50) disposed beside the first screen (40) in a width direction of the vehicle; an operation switch (81) for a driver of the vehicle to input an operation to the first screen (40) and the second screen (50); a first switch (82) that enables a first operation with the operation switch (81) to the first screen (40); and a second switch (83) that enables a second operation with the operation switch (81) to the second screen (50). In the present invention, the direction from the first switch (82) toward the second switch (83) is identical with a direction from the first screen (40) toward the second screen (50). When the first switch (82) is operated, a first display portion of display portions of the first screen (40) is displayed in an emphasizing manner. The first display portion displays information on an operation target of the first operation. When the second switch (83) is operated, a second display portion of display portions of the second screen (50) is displayed in an emphasizing manner. The second display portion displays information on an operation target of the second operation.

## Description

### Technical Field

The present invention relates to an automotive display method and an automotive display device.

### Background Art

An automotive display control system is known, which includes: a first display unit and a second display unit that are disposed inside a passenger compartment; and a screen switch operation receiver that is disposed at a position that allows a user to operate it while maintaining the driving posture and receives a first screen switch operation and a second screen switch operation from the user, wherein when the first screen switch operation is received, the display of content is switched on the first display unit, and when the second screen switch operation is received, the display of content is switched on the second display unit (Patent Document 1).

### Prior Art Documents

### Patent Documents

Patent Document 1: WO2019/225305

### Summary of Invention

### Problems to be solved by Invention

In the above prior art, however, when there are multiple screens, a problem is that it is difficult to intuitively understand the correspondence relationship between an operation of switching the display of a screen and the screen whose display is switched by the operation.

A problem to be solved by the present invention is to provide an automotive display method and an automotive display device with which, when a display device includes multiple screens, the screen whose display changes depending on an operation can readily be perceived.

### Means for solving problems

The present invention solves the above problem through: when a first switch that enables a first operation with an operation switch to a first screen is operated, displaying a first display portion of display portions of the first screen in an emphasizing manner, wherein the first display portion displays information on an operation target of the first operation; when a second switch that enables a second operation with the operation switch to a second screen is operated, displaying a second display portion of display portions of the second screen in an emphasizing manner, wherein the second display portion displays information on an operation target of the second operation; and arranging the first switch and the second switch so that the direction from the first switch toward the second switch is the same as the direction from the first screen toward the second screen.

### Effect of Invention

According to the present invention, when a display device includes multiple screens, the screen whose display changes depending on an operation can readily be perceived.

### Brief Description of Drawings

FIG. 1 is a front view illustrating an example of the vehicle equipped with an automotive display device according to the present invention.
FIG. 2 is a set of front views illustrating an example of steering switches of FIG. 1.
FIG. 3 is a block diagram illustrating an example of an embodiment of the automotive display device according to the present invention.
FIG. 4 is a set of front views illustrating an example of displays on the first screen and second screen of FIG. 1.
FIG. 5 is a set of front views illustrating an example of displays when the first switch is operated in FIG. 4.
FIG. 6 is a set of front views illustrating an example of displays when the second switch is operated in FIG. 4.
FIG. 7 is a set of front views illustrating an example of displays when the second switch is operated in FIG. 6.
FIG. 8A is a flowchart illustrating an example of a processing procedure in the automotive display device of FIG. 3 (part 1).
FIG. 8B is a flowchart illustrating an example of a processing procedure in the automotive display device of FIG. 3 (part 2).

### Mode(s) for Carrying out the Invention

Hereinafter, one or more embodiments of the present invention will be described with reference to the drawings. In the following description, the driver's seat of the vehicle is assumed to be installed on the left side of the vehicle, and if the driver's seat is installed on the right side of the vehicle, the right and left in the following description should be read as being symmetrical. In the following description, the occupants of the vehicle, including the driver, are also referred to as users.

### <Configuration of Automotive Display Device>

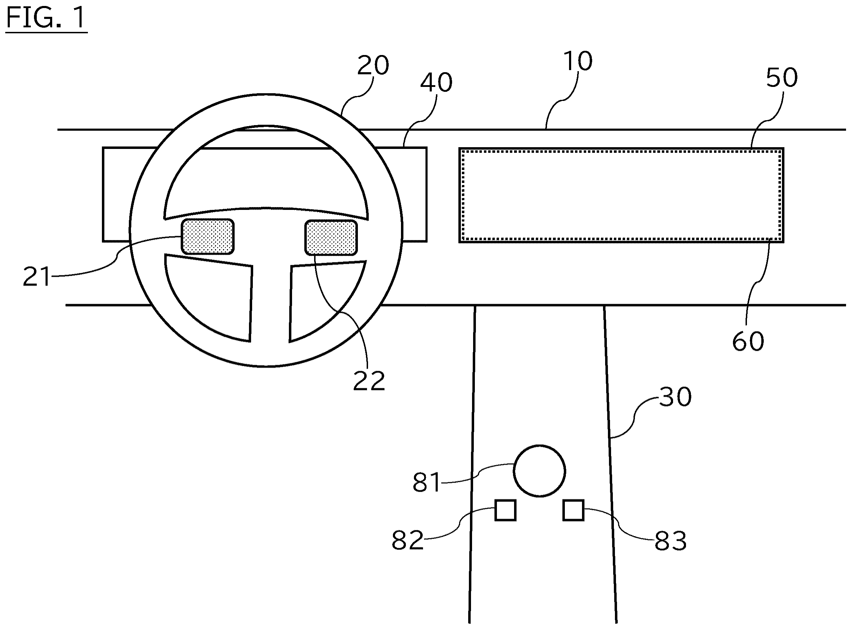

FIG. 1 is a front view illustrating an example of the vehicle equipped with an automotive display device according to the present invention, illustrating the arrangement of each device when viewed from the driver's seat toward the front of the vehicle. An instrument panel 10 and a steering wheel 20 are arranged in front of the driver's seat, and a center console 30 is arranged between the driver's seat and the front passenger seat. The instrument panel 10 includes a first screen 40 and a second screen 50, and the second screen 50 is provided with a touch panel 60 to input a touch operation to the second screen 50 by a user's finger or a stylus pen. The touch panel 60 is disposed on the second screen 50 and constitutes a touch screen together with the second screen 50. The first screen 40 and the second screen 50 are, for example, liquid crystal displays, and may be equipped with speakers as output devices.

As illustrated in FIG. 1, the first screen 40 is disposed in front of the driver's seat, and the second screen 50 is disposed alongside the first screen 40 in the width direction of the vehicle. The position of the second screen 50 is not particularly limited, provided that it is within a range in which the driver can visually recognize the information displayed on the second screen 50, and may be, for example, in the central portion of the instrument panel 10 in the vehicle width direction, in front of the front passenger seat, etc. The first screen 40 and the second screen 50 may be arranged adjacent to each other.

The size of the first screen 40 and the second screen 50 is not particularly limited, provided that it is within a range in which the user can perform their operations appropriately, and may be, for example, 10 to 15 inches. The first screen 40 and the second screen 50 are not particularly limited, provided that they are display devices that present information to the user, and may be projectors such as head-up displays.

The steering wheel 20 is equipped with steering switches 21 and 22 that input instructions to onboard devices, etc. The steering switch 21 is disposed at a position at which the driver can operate it with the left hand while holding the steering wheel 20, and the steering switch 22 is disposed at a position at which the driver can operate it with the right hand while holding the steering wheel 20.

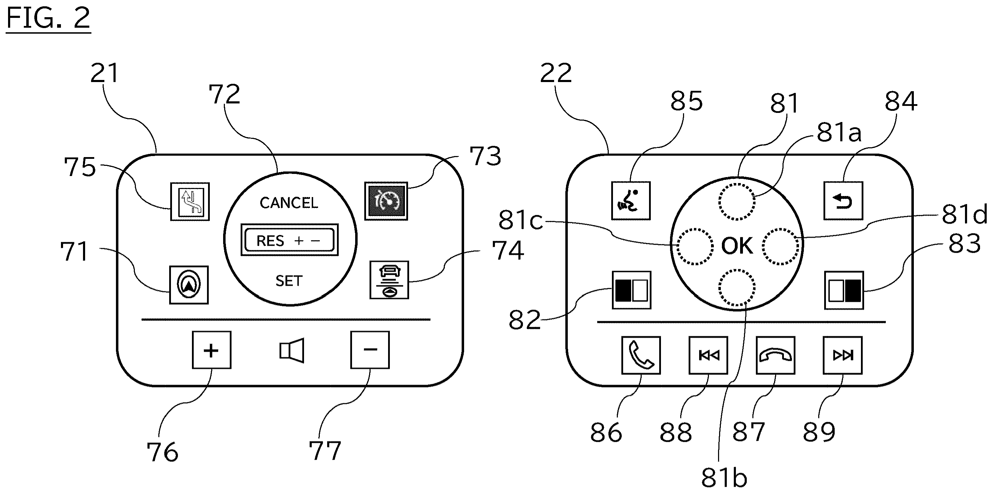

FIG. 2 is a front view illustrating an example of the steering switches 21 and 22 provided on the steering wheel 20. The steering switch 22 on the right side includes an operation switch 81, a first switch 82, and a second switch 83.

The operation switch 81 is a switch for the driver to input operations to the first screen 40 and the second screen 50, and is, for example, a button switch, a toggle switch, a capacitance switch, or a combination of these. As illustrated in FIG. 2, the operation switch 81 is disposed between the first switch 82 and the second switch 83. In addition, the operation switch 81 has a direction input unit that allows the driver to input an arbitrary direction for selecting information to be the operation target of an operation to the first screen 40 by the operation switch 81 (also referred to as a first operation, hereinafter) from information displayed on the first screen 40 and selecting information to be the operation target of an operation to the second screen 50 by the operation switch 81 (also referred to as a second operation, hereinafter) from information displayed on the second screen 50. Information to be the operation target refers to information whose content displayed on a screen (specifically, at least one of the first screen 40 and the second screen 50) changes due to a certain operation (e.g., the first operation, the second operation, an operation with the touch panel 60, etc.).

As an example, the operation switch 81 illustrated in FIG. 2 includes direction input units 81a to 81d. Each direction input unit is a capacitance switch, and when the direction input unit 81a is operated, the display of the first screen 40 and second screen 50 is controlled by the controller 90 assuming that the upward direction is input. Similarly, the display is controlled by the controller 90 assuming that the downward direction is input when the direction input unit 81b is operated, the left direction is input when the direction input unit 81c is operated, and the right direction is input when the direction input unit 81d is operated.

The first switch 82 and the second switch 83 are switches that respectively enable the driver to operate the first screen 40 and the second screen 50 by the operation switch 81 (i.e., enable operation of the first screen 40 and the second screen 50 by the operation switch 81). The first switch 82 and the second switch 83 are physical switches such as button switches and toggle switches. In addition, the arrangement of the first switch 82 and the second switch 83 corresponds to the arrangement of the first screen 40 and the second screen 50, so that it is possible to intuitively understand which switch will enable input of operations to which screen when it is operated. Specifically, the first switch 82 and the second switch 83 are arranged so that the direction from the first switch 82 toward the second switch 83 is the same as the direction from the first screen 40 toward the second screen 50. For example, when the first screen 40 is disposed on the left side of the second screen 50 as illustrated in FIG. 1, the first switch 82 is disposed on the left side of the second switch 83 as illustrated in FIG. 2. In this case, the direction from the first switch 82 toward the second switch 83 and the direction from the first screen 40 toward the second screen 50 are both to the right in the figure. On the other hand, in the opposite case to that illustrated in FIG. 1, when the first screen 40 is disposed on the right side of the second screen 50, the first switch 82 will be disposed on the right side of the second switch 83. In this case, the direction from the first switch 82 toward the second switch 83 and the direction from the first screen 40 toward the second screen 50 are both to the left.

The operation switch 81, the first switch 82, and the second switch 83 may be arranged in the steering switch 22 of the steering wheel 20, or may also be arranged in the center console 30 between the driver's seat and the front passenger seat of the vehicle as illustrated in FIG. 1. In either case, the shape and size of each switch are set appropriately within a range in which the driver can operate them properly. When the steering switch 22 is a touch screen equipped with a touch panel, the operation switch 81, the first switch 82, and the second switch 83 may be icons displayed on the steering switch 22.

The first switch 82 may display a first icon that corresponds to the forms of the first screen 40 and second screen 50 and emphasizes the first screen 40. Likewise, the second switch 83 may display a second icon that corresponds to the forms of the first screen 40 and second screen 50 and emphasizes the second screen 50. "Corresponding to the forms of the first screen 40 and second screen 50" refers, for example, to corresponding to the shape, arrangement, etc. of the first screen 40 and second screen 50. "Emphasizing the first screen 40 and second screen 50" refers, for example, to making a portion corresponding to the first screen 40 or second screen 50 in the icon have a different color than other portions, adding to a portion corresponding to the first screen 40 or second screen 50 a display emphasizing that portion, etc.

In the steering switch 22 illustrated in FIG. 2, the first switch 82 and the second switch 83 are icons each having two rectangles corresponding to the shapes of the first screen 40 and second screen 50. In the first icon of the first switch 82, the rectangle on the left side corresponding to the first screen 40 is black hatched, and in the second icon of the second switch 83, the rectangle on the right side corresponding to the second screen 50 is black hatched. When the first switch 82 and the second switch 83 are physical switches such as button switches, the first icon and the second icon illustrated in FIG. 2 are displayed on each of the first switch 82 and the second switch 83, and when the steering switch 22 is a touch screen, the first icon and the second icon illustrated in FIG. 2 are displayed on the steering switch 22.

The steering switch 22 includes switches 84 to 89 in addition to the above-described operation switch 81, first switch 82, and second switch 83. The switch 84 is a switch for canceling an input operation, and the switch 85 is a switch for starting a voice input function using voice recognition. The switch 86 is a switch for starting a telephone function, and the switch 87 is a switch for ending the telephone function. The switches 88 and 89 are switches used for operations such as changing the song being played when a music player is running.

On the other hand, the steering switch 21 on the left side includes switches 71 to 77. The switch 71 is a switch for starting autonomous travel control, and the switch 72 is a switch for performing adjustment and the like of the vehicle speed and the inter-vehicle distance while autonomous travel control is being executed. The switch 73 is a switch for changing the set vehicle speed during constant speed travel control, and the switch 74 is a switch for changing the inter-vehicle distance during following travel. The switch 75 is a switch for starting a lane change assist function. The switches 76 and 77 are switches for adjusting the speaker volume.

The steering switches 21 and 22 illustrated in FIG. 2 may have a function of displaying the switches 71 to 77, the operation switch 81, the first switch 82, the second switch 83, and the switches 84 to 89 in any color by using a backlight of any color. In the present embodiment, the steering switches 21 and 22 including the operation switch 81, the first switch 82, and the second switch 83 can be operated only by the driver. In contrast, the touch panel 60 can be operated even by occupants other than the driver.

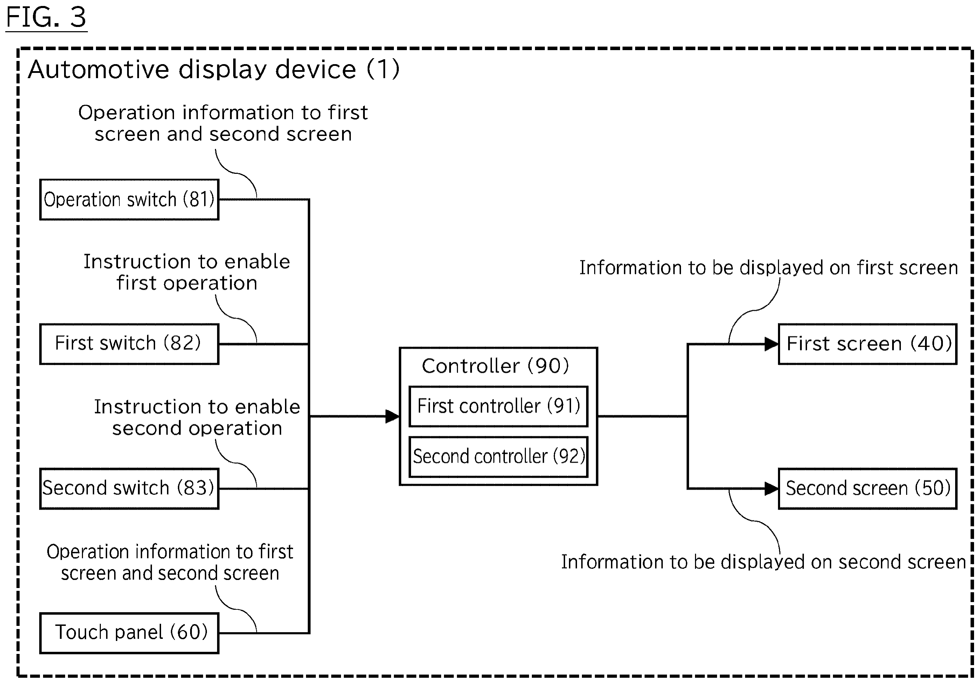

FIG. 3 is a block diagram illustrating an example of an embodiment of an automotive display device 1 according to the present invention. The automotive display device 1 is a system composed of the operation switch 81, first switch 82, second switch 83, touch panel 60, first screen 40, and second screen 50 of the devices illustrated in FIGS. 1 and 2. As illustrated in FIG. 3, in the automotive display device 1, the controller 90 acquires instructions and information input from the operation switch 81, first switch 82, second switch 83, and touch panel 60 and controls the display of the first screen 40 and second screen 50 based on the acquired instructions and information.

The controller 90 may include a first controller 91 that controls the display of the first screen 40 and second screen 50 based on the instructions output from the operation switch 81, and a second controller 92, different from the first controller 91, that controls the display of the first screen 40 and second screen 50 based on the instructions output from the first switch 82 and second switch 83.

The controller 90 is a device that controls the various devices, which constitute the automotive display device 1, to cooperate with each other and presents information to the user. The controller 90 is, for example, a computer, and includes a CPU (Central Processing Unit) that is a processor, a ROM (Read Only Memory) that stores programs, and a RAM (Random Access Memory) that serves as an accessible storage device. The CPU is an operating circuit that executes the programs stored in the ROM and achieves the display function possessed by the controller 90.

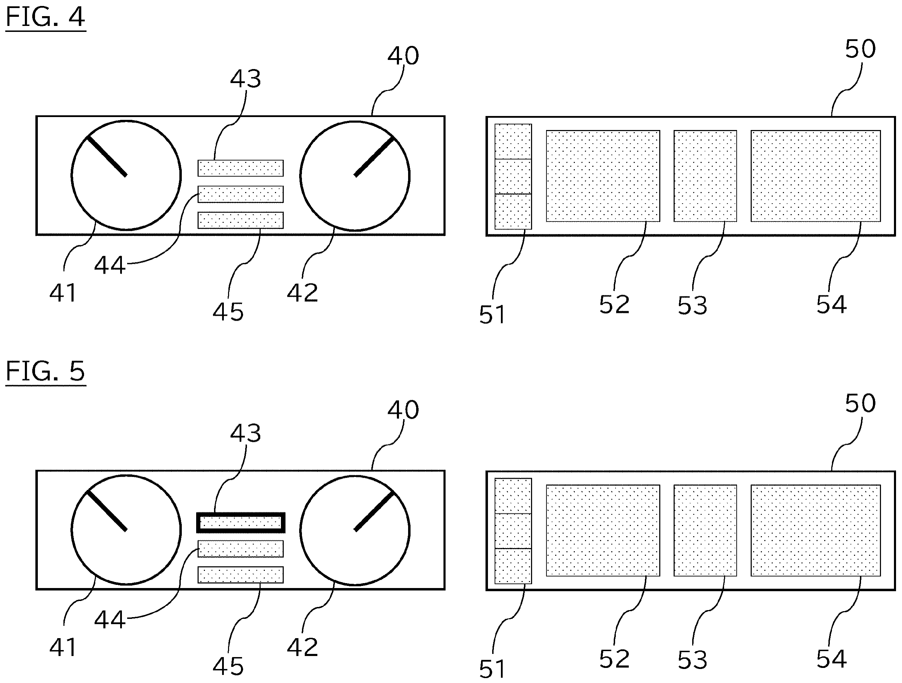

The display function possessed by the controller 90 is a function that allows the user to easily perceive the screen whose display changes depending on the operation when the controller 90 controls the display of the first screen 40 and second screen 50. The ROM of the controller 90 stores programs for achieving the display function, and the CPU executes the programs stored in the ROM to achieve the display function. The display function will be described below with reference to FIGS. 4 to 7.

### <Display Function of Controller>

FIG. 4 is a set of front views illustrating an example of information displayed on the first screen 40 and second screen 50. The first screen 40 includes a display portion 41 and a display portion 42. The display portion 41 presents information on the vehicle's traveling speed, and the display portion 42 presents information on the engine's rotation speed. The first screen 40 further includes display portions 43, 44, and 45 that present items of information displayed between the display portions 41 and 42. Examples of the information displayed between the display portions 41 and 42 include information on autonomous travel control, information on audio equipment, information on route guidance, and information on warning regarding the vehicle's traveling state and travel environment.

On the other hand, the second screen 50 includes a display portion 51 that presents a menu icon indicating candidates for information to be displayed on the second screen 50. The menu icon is displayed at a predetermined position on the second screen 50, and unlike other display portions, its display position does not change due to user operation, and is always displayed at the same position while the second screen 50 is operating (the power is ON). The predetermined position may be, for example, the left end of the second screen 50 as illustrated in FIG. 4, or the lower side of the second screen 50 (in particular, the lower center of the screen). The menu icon illustrated in FIG. 4 is divided into three sections, each of which displays an icon indicating a candidate for information to be displayed on the second screen 50.

Display portions 52, 53, and 54 respectively present map information with a travel route superimposed thereon, route guidance information presenting the vehicle's traveling direction, and information regarding audio equipment. The information displayed on the second screen 50 is not limited to these, and in addition to the menu icon, information regarding telephone functions using a mobile terminal, information regarding a concierge service using AI, information regarding the vehicle's traveling state, time information, information regarding the vehicle's battery, information regarding game apps, etc. can be displayed on the second screen 50.

Upon display of the above-described information on the first screen 40 and the second screen 50, when the first switch 82 is operated, the controller 90 operates to display a display portion (also referred to as a first display portion, hereinafter) of display portions of the first screen 40 in an emphasizing manner. The first display portion displays information on an operation target of the first operation. In contrast, when the second switch 83 is operated, the controller 90 operates to display a display portion (also referred to as a second display portion, hereinafter) of display portions of the first screen 40 in an emphasizing manner. The second display portion displays information on an operation target of the second operation.

The information on an operation target of the first operation refers to information whose content displayed on the first screen 40 changes due to the first operation, and the information on an operation target of the second operation refers to information whose content displayed on the second screen 50 changes due to the second operation. In addition, emphasizing and displaying the first display portion and the second display portion refer, for example, to making a part of the display portion have a different color than other portions (e.g., a color opposite to the color surrounding the display portion), adding to a part of the display portion a display emphasizing that part, etc.

Specifically, the controller 90 operates to: display a first frame having a shape corresponding to the shape of the first display portion around the first display portion when displaying the first display portion in an emphasizing manner; and display a second frame having a shape corresponding to the shape of the second display portion around the second display portion when displaying the second display portion in an emphasizing manner. Then, the controller 90 operates to make the colors of the first frame and second frame have different colors than the colors of the surroundings of the first display portion and second display portion (e.g., yellow). In addition to this, the controller 90 may operate to set the colors of the first switch 82 and second switch 83 to the same colors as the colors of the first frame and second frame, respectively.

For example, upon display of the information illustrated in FIG. 4 on the first screen 40 and second screen 50, when the first switch 82 is operated, the controller 90 enables the operation with the operation switch 81 to the first screen 40. Then, the controller 90 sets the information displayed on the display portion 43 as the operation target of the first operation and operates to display a frame having a shape corresponding to the shape of the display portion 43 around the display portion 43, which is the first display portion, as illustrated in FIG. 5. In the case illustrated in FIG. 5, the information displayed on the display portion 43 is set as the operation target of the first operation, but other information displayed on the first screen 40 may be set as the operation target.

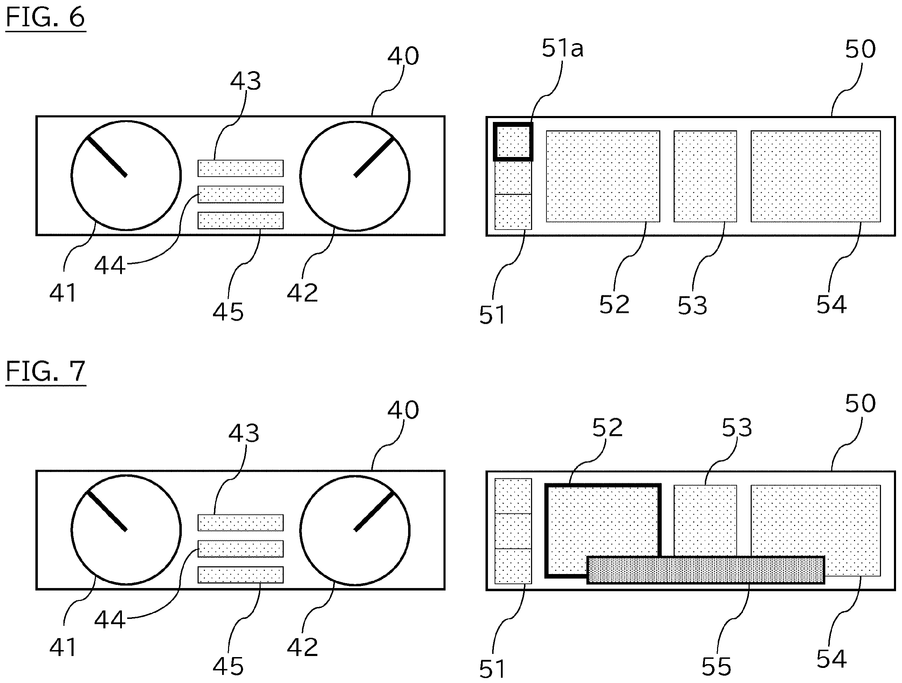

Upon display of the first display portion in an emphasizing manner, when the second switch 83 is operated, the controller 90 operates to display the menu icon displayed on the second screen 50 in an emphasizing manner. For example, upon display of the information illustrated in FIG. 5 on the first screen 40 and second screen 50, when the second switch 83 is operated, the controller 90 enables the operation with the operation switch 81 to the second screen 50. Then, the controller 90 sets the information (icon) corresponding to a section 51a on the upper side of the menu icon displayed on the display portion 51 as the operation target of the second operation, and as illustrated in FIG. 6, operates to display a frame having a shape corresponding to the shape of the section 51a around the section 51a, which is the second display portion. In the case illustrated in FIG. 6, the information displayed in the section 51a of the display portion 51 is set as the operation target of the second operation, but information on other sections of the display portion 51 may be set as the operation target.

Upon display of the menu icons displayed on the second screen 50 in an emphasizing manner, when the second switch 83 is operated, the controller 90 operates to display a display portion other than the menu icon on the second screen 50 in an emphasizing manner. For example, upon display of the information illustrated in FIG. 6 on the first screen 40 and second screen 50, when the second switch 83 is operated, the controller 90 sets the information displayed on the display portion 52 as the operation target of the second operation, and operates to display a frame having a shape corresponding to the shape of the display portion 52 around the display portion 52, which is the second display portion, as illustrated in FIG. 7. In the case illustrated in FIG. 7, the information displayed on the display portion 52 is set as the operation target of the second operation, but other information displayed on the second screen 50 may be set as the operation target.

Upon display of the display portion other than the menu icon on the second screen 50, when the second switch 83 is operated, the controller 90 displays the menu icon in an emphasizing manner. For example, upon display of the information illustrated in FIG. 7 on the first screen 40 and second screen 50, when the second switch 83 is operated, the controller 90 sets the information (icon) corresponding to the section 51a on the upper side of the menu icon displayed on the display portion 51 as the operation target of the second operation, and operates to display a frame having a shape corresponding to the shape of the section 51a around the section 51a, which is the second display portion, as illustrated in FIG. 6.

Upon display of the second display portion in an emphasizing manner, when the first switch 82 is operated, the controller 90 operates to display any of the display portions of the first screen 40 in an emphasizing manner. For example, upon display of the information illustrated in FIG. 6 on the first screen 40 and second screen 50, when the first switch 82 is operated, the controller 90 enables the operation with the operation switch 81 to the first screen 40. Then, the controller 90 sets the information displayed on the display portion 43 as the operation target of the first operation, and operates to display a frame having a shape corresponding to the shape of the display portion 43 around the display portion 43, which is the first display portion, as illustrated in FIG. 5.

When a direction for selecting information to be the operation target from the information displayed on the first screen 40 and second screen 50 is input to the direction input unit of the operation switch 81, the controller 90 operates to display in an emphasizing manner a display portion of display portions around the first display portion or second display portion, which is currently displayed in an emphasizing manner. For example, upon display of the information illustrated in FIG. 5 on the first screen 40 and second screen 50, when the direction input unit 81b illustrated in FIG. 2 is operated, the controller 90 operates to display a frame having a shape corresponding to the shape of the display portion 54 around the display portion 44 illustrated in FIG. 5. Upon display of the information illustrated in FIG. 7 on the first screen 40 and second screen 50, when the direction input unit 81d illustrated in FIG. 2 is operated, the controller 90 operates to display a frame having a shape corresponding to the shape of the display portion 53 around the display portion 53 illustrated in FIG. 7.

In the examples illustrated in FIGS. 5 to 7, the first display portion is any one of the display portions of the first screen 40, the second display portion is any one of the display portions of the second screen 50, and the controller 90 operates to display any one of the first display portion and the second display portion in an emphasizing manner. However, these are merely examples, and multiple display portions of the first screen 40 may be displayed as the first display portion in an emphasizing manner, and multiple display portions of the second screen 50 may also be displayed as the second display portion in an emphasizing manner.

When a touch operation is input to the touch panel 60, the controller 90 may operate to stop the process of displaying the first display portion and the second display portion in an emphasizing manner. This is because, when a touch operation is input, the user can easily perceive which screen the operation is being input to. As an example, upon display of the display portion 43 of the first screen 40 in an emphasizing manner as illustrated in FIG. 5, when a touch operation is input to the touch panel 60, the controller 90 operates to stop the process of displaying the display portion 43 in an emphasizing manner. Then, the display of the first screen 40 becomes the display illustrated in FIG. 4. In addition, when the first switch 82 and the second switch 83 are not operated for a predetermined time or more, the controller 90 may operate to stop the process of displaying the first display portion and the second display portion in an emphasizing manner. This is because, when a state in which the driver does not input an operation continues for a predetermined time or more (e.g., 5 to 30 seconds), it is assumed that the driver will not input a new operation.

Stop of the above-described process may be performed by a user switching between enabling and disabling. That is, the controller 90 has a function of stopping the process of displaying the first display portion and the second display portion in an emphasizing manner when the first switch 82 and the second switch 83 are not operated for a predetermined time or more, and the controller 90 operates to stop the process of displaying the display portions in an emphasizing manner when the first switch and the second switch are not operated for the predetermined time or more upon the function being enabled. In contrast, when that function is disabled, the controller 90 operates to continue the process of displaying the display portions in an emphasizing manner even if the first switch or the second switch is not operated for the predetermined time or more.

When the first switch 82 or the second switch 83 is operated after the process of displaying the display portions in an emphasizing manner is stopped, the controller 90 may operate to display a display portion that displays information displayed in the first display portion or the second display portion in an emphasizing manner. This is because if a display portion of information different from the information that was displayed in an emphasizing manner when the process was stopped is displayed in an emphasizing manner, the user will feel uncomfortable. In addition, the controller 90 may operate to store the information displayed in the first display portion or the second display portion when the engine of the vehicle is stopped, and display in an emphasizing manner a display portion that displays the stored information when the engine is started after the engine is stopped. This is because if a display portion of information different from the information that was displayed in an emphasizing manner when the engine was stopped is displayed in an emphasizing manner, the user will feel uncomfortable.

The controller 90 may operate to: preliminarily set a part of information displayed on the second screen 50 so as not to accept the second operation from the operation switch 81 and so as to accept an operation input from the touch panel 60; and display a pop-up image to prompt the driver to perform the operation with the touch panel 60 when the information displayed on the second display portion is set so as not to accept the second operation upon the second operation being input. For example, in a case in which the information displayed on the display portion 52 is preliminarily set so as not to accept the second operation from the operation switch 81, when the second operation on the information displayed on the display portion 52 is detected, the controller 90 operates to display a pop-up image 55 at the bottom center of the second screen 50.

The controller 90 preliminarily sets, as information that does not accept the second operation from the operation switch 81, information displayed on the second screen that is checked by the driver less frequently than a predetermined value while driving. The predetermined value can be set to an appropriate value within a range in which the driver does not feel uncomfortable about not being able to operate the operation switch 81 while driving, and is set so that, for example, information that the driver checks more than twice from the current position to the destination can be set as information that accepts the second operation. Examples of information that the driver checks more than twice from the current position to the destination include map information, route guidance information, information regarding audio equipment, information regarding the vehicle's traveling state, time information, and information regarding the vehicle's battery.

### <Processing in Automotive Display Device>

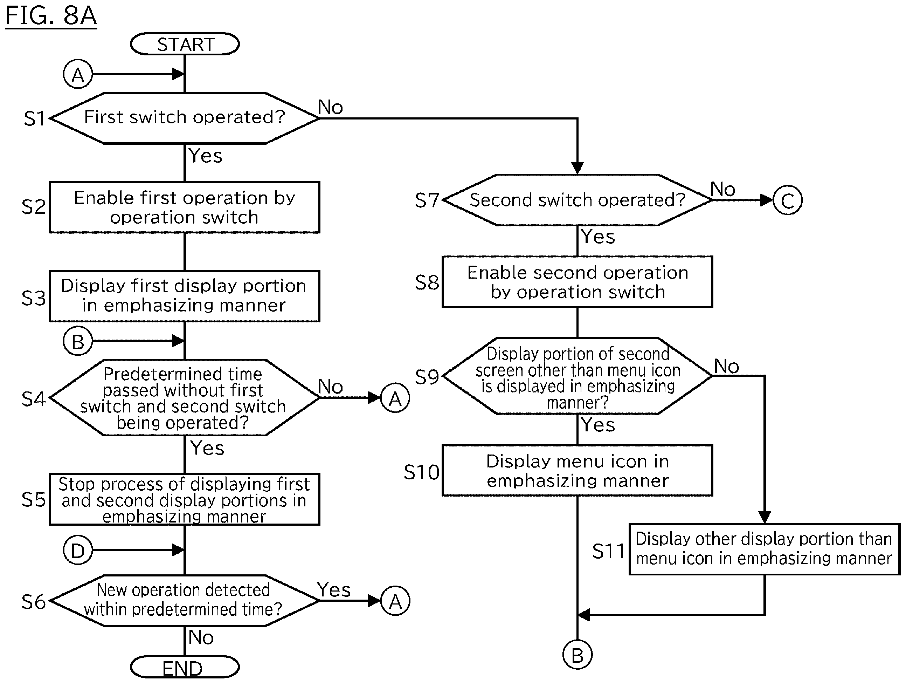

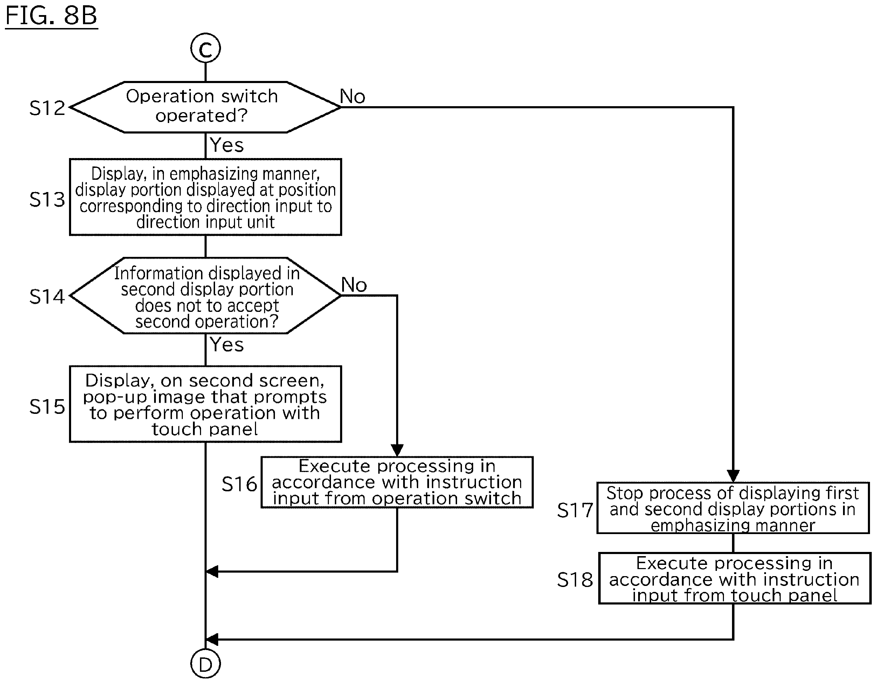

The procedure when the controller 90 processes information will be described below with reference to FIGS. 8A to 8B. FIGS. 8A and 8B represent an example of a flowchart illustrating information processing in the automotive display device 1 of the present embodiment. The processing described below is executed by a processor (CPU) included in the controller 90 when some operation is performed on the automotive display device 1.

First, in step S1 of FIG. 8A, a determination is made as to whether or not the driver operates the first switch 82. When a determination is made that the driver operates the first switch 82, the process proceeds to step S2, in which the first operation by the operation switch 81 is enabled, and in the subsequent step S3, the first display portion that displays the information on the operation target of the first operation is displayed in an emphasizing manner, and the process proceeds to step S4.

On the other hand, when a determination is made that the driver does not operate the first switch 82, the process proceeds to step S7, in which a determination is made as to whether or not the driver operates the second switch 83. When a determination is made that the driver operates the second switch 83, the process proceeds to step S8, in which the second operation by the operation switch 81 is enabled, and in the subsequent step S9, a determination is made as to whether or not the display portion of the second screen other than the menu icon is displayed in an emphasizing manner.

When a determination is made that the display portion of the second screen other than the menu icon is displayed in an emphasizing manner, the process proceeds to step S10, in which the menu icon is displayed in an emphasizing manner, and the process proceeds to step S4. When a determination is made that the display portion of the second screen is not displayed in an emphasizing manner, the process also proceeds to step S10. On the other hand, when a determination is made that the menu icon is displayed in an emphasizing manner, the process proceeds to step S11, in which the display portion of the second screen other than the menu icon is displayed in an emphasizing manner, and the process proceeds to step S4.

In step S4, a determination is made as to whether a predetermined time has passed without the first switch 82 and the second switch 83 being operated. When a determination is made that the first switch 82 or the second switch 83 has been operated within the predetermined time, the process proceeds to step S1. On the other hand, when a determination is made that the predetermined time has passed without the first switch 82 and the second switch 83 being operated, the process proceeds to step S5, in which the process of displaying the first display portion and second display portion in an emphasizing manner is stopped.

In the subsequent step S6, a determination is made as to whether a new operation is detected within a predetermined time. When a determination is made that a new operation is detected within the predetermined time, the process proceeds to step S1. On the other hand, when a determination is made that a new operation is not detected within the predetermined time, the execution of the routine is concluded.

On the other hand, when a determination is made in step S7 that the driver does not operate the second switch 83, the process proceeds to step S12 of FIG. 8B, in which a determination is made as to whether or not the driver has operated the operation switch 81. When a determination is made that the driver has operated the operation switch 81, the process proceeds to step S13, in which the display portion displayed at the position corresponding to the direction input to the direction input unit is displayed in an emphasizing manner. When a second operation has been input, a determination is made in step S14 as to whether or not the information displayed in the second display portion is preliminarily set so as not to accept the second operation.

When a determination is made that the information displayed in the second display portion is preliminarily set so as not to accept the second operation, the process proceeds to step S15, in which the pop-up image 55 that prompts the driver to perform the operation with the touch panel 60 is displayed on the second screen 50. On the other hand, when a determination is made that the information displayed in the second display portion is not preliminarily set so as not to accept the second operation, the process proceeds to step S16, in which processing is performed in accordance with the instruction input from the operation switch 81. After that, the process proceeds to step S6 of FIG. 8A.

On the other hand, when a determination is made that the driver does not operate the operation switch 81, the process proceeds to step S17, in which the process of displaying the first display portion and second display portion in an emphasizing manner is stopped on the assumption that an operation is input to the touch panel 60, and in the subsequent step S18, processing is executed in accordance with the instruction input from the touch panel 60. After that, the process proceeds to step S6 of FIG. 8A.

### <Embodiments of Present Invention>

As described above, according to the present embodiment, an automotive display method executed by a display device of a vehicle is provided. The display device comprises: a first screen 40 disposed in front of a driver's seat; a second screen 50 disposed beside the first screen 40 in a width direction of the vehicle; an operation switch 81 for a driver of the vehicle to input an operation to the first screen 40 and the second screen 50; a first switch 82 that enables a first operation with the operation switch 81 to the first screen 40; a second switch 83 that enables a second operation with the operation switch 81 to the second screen 50; and a controller 90 that controls display on the first screen 40 and the second screen 50. The operation switch 81 is disposed between the first switch 82 and the second switch 83. The direction from the first switch 82 toward the second switch 83 is identical with the direction from the first screen 40 toward the second screen 50. The controller 90 operates to: when the first switch 82 is operated, display a first display portion of display portions of the first screen 40 in an emphasizing manner, wherein the first display portion displays information on an operation target of the first operation; and when the second switch 83 is operated, display a second display portion of display portions of the second screen 50 in an emphasizing manner, wherein the second display portion displays information on an operation target of the second operation. Through this operation, when the display device includes multiple screens, the screen whose display changes depending on an operation can readily be perceived.

Moreover, according to the automotive display method of the present embodiment, the controller 90 operates to: display, at a predetermined position on the second screen 50, a menu icon indicating a candidate for information to be displayed on the second screen 50; and display the menu icon in an emphasizing manner when the second switch 83 is operated upon display of the first display portion in the emphasizing manner. This allows the driver to immediately select information to be displayed on the second screen 50.

Furthermore, according to the automotive display method of the present embodiment, the controller 90 operates to: display a display portion of the second screen 50 other than the menu icon in an emphasizing manner when the second switch 83 is operated upon display of the menu icon in the emphasizing manner; and display the menu icon in the emphasizing manner when the second switch 83 is operated upon display of the display portion of the second screen 50 other than the menu icon in the emphasizing manner. Through this operation, it is possible to switch between the menu icon and the display portion other than the menu icon without using the operation switch 81.

In addition, according to the automotive display method of the present embodiment, the controller 90 operates to display any of the display portions of the first screen 40 in an emphasizing manner when the first switch 82 is operated upon display of the second display portion in the emphasizing manner. Through this operation, the screen whose display changes depending on an operation can readily be perceived.

Moreover, according to the automotive display method of the present embodiment, the operation switch 81 has a direction input unit 81a to 81d that allows the driver to input an arbitrary direction for selecting information to be the operation target of the first operation from information displayed on the first screen 40 and selecting information to be the operation target of the second operation from information displayed on the second screen 50, and the controller 90 operates to display a display portion of display portions around the first display portion or the second display portion in an emphasizing manner when the direction is input to the direction input unit 81a to 81d, wherein the display portion is displayed at a position corresponding to the input direction. Through this operation, it is possible to accurately display in an emphasizing manner the display portion of the information selected by the driver as the operation target.

Furthermore, according to the automotive display method of the present embodiment, the display device 90 has a touch panel 60 to input a touch operation to the second screen 50, and the controller 90 operates to stop a process of displaying the first display portion and the second display portion in an emphasizing manner when the touch operation is input to the touch panel 60. Through this operation, when the user can easily perceive which screen the user is inputting an operation on, it is possible to stop the unnecessary process of displaying the display portion in an emphasizing manner.

In addition, according to the automotive display method of the present embodiment, the controller 90 operates to stop a process of displaying the first display portion and the second display portion in an emphasizing manner when the first switch 82 and the second switch 83 are not operated for a predetermined time or more. Through this operation, when it is assumed that the driver will not input a new operation, it is possible to stop the unnecessary process of displaying the display portion in an emphasizing manner.

Moreover, according to the automotive display method of the present embodiment, the controller 90 has a function of stopping a process of displaying the first display portion and the second display portion in an emphasizing manner when the first switch 82 and the second switch 83 are not operated for a predetermined time or more, and the controller 90 operates to stop the process when the first switch 82 and the second switch 83 are not operated for the predetermined time or more upon the function being enabled. Through this operation, when it is assumed that the driver will not input a new operation, it is possible to stop the unnecessary process of displaying the display portion in an emphasizing manner.

Furthermore, according to the automotive display method of the present embodiment, the controller 90 operates to display a display portion that displays information displayed in the first display portion or the second display portion in the emphasizing manner when the first switch 82 or the second switch 83 is operated after the process is stopped. This can suppress uncomfortable feeling given to the user due to emphasized display of a display portion of information different from the information that was displayed in an emphasizing manner when that process was stopped.

In addition, according to the automotive display method of the present embodiment, the controller 90 operates to: store information displayed in the first display portion or the second display portion when an engine of the vehicle is stopped; and display a display portion that displays the stored information when the engine is started after the engine is stopped. This can suppress uncomfortable feeling given to the user due to emphasized display of a display portion of information different from the information that was displayed in an emphasizing manner when that engine was stopped.

Moreover, according to the automotive display method of the present embodiment, the controller 90 operates to: display a first frame around the first display portion when displaying the first display portion in the emphasizing manner; display a second frame around the second display portion when displaying the second display portion in the emphasizing manner; and set a color of the first switch and a color of the second switch to same colors as a color of the first frame and a color of the second frame, respectively. Through this operation, it is possible to more reliably emphasize the display portion and to more easily perceive the screen whose display changes depending on an operation.

Furthermore, according to the automotive display method of the present embodiment, the controller 90 operates to: display a first icon on the first switch 82 that corresponds to forms of the first screen 40 and the second screen 50 and emphasizes the first screen 40; and display a second icon on the second switch 83 that corresponds to the forms and emphasizes the second screen 50. Through this operation, it is possible to more easily perceive the screen whose display changes depending on an operation.

In addition, according to the automotive display method of the present embodiment, the operation switch 81, the first switch 82, and the second switch 83 are provided on a steering wheel 20 of the vehicle or on a center console 30 between the driver's seat and a front passenger seat. This allows the driver to easily perform an operation using a switch.

Moreover, according to the automotive display method of the present embodiment, the display device has a touch panel 60 to input a touch operation to the second screen 50, and the controller 90 operates to: preliminarily set a part of information displayed on the second screen 50 so as not to accept the second operation and so as to accept an operation input from the touch panel 60; and display a pop-up image 55 on the second screen 50 to prompt the driver to perform the operation with the touch panel 60 when the information displayed on the second display portion is set so as not to accept the second operation upon the second operation being input. This allows the driver to recognize more quickly that an operation with the touch panel 60 is required.

Furthermore, according to the automotive display method of the present embodiment, the controller 90 operates to preliminarily set, as information that accepts the second operation, information displayed on the second screen 50 that is checked by the driver more frequently than a predetermined value while driving. This allows the driver to perform an operation with the operation switch 81 while driving, for information that the driver frequently checks while driving.

In addition, according to the automotive display method of the present embodiment, the first display portion is any one of the display portions of the first screen 40, the second display portion is any one of the display portions of the second screen 50, and the controller 90 operates to display any one of the first display portion and the second display portion in an emphasizing manner. This allows the display portions to be emphasized more reliably.

Moreover, according to the automotive display method of the present embodiment, the controller 90 comprises: a first controller 91 that controls display of the first screen 40 and the second screen 50 in accordance with instructions output from the operation switch 81; and a second controller 92 different from the first controller 91 that controls display of the first screen 40 and the second screen 50 in accordance with instructions output from the first switch 82 and the second switch 83. This allows a suitable controller to be used for processing to each switch.

Furthermore, according to the automotive display method of the present embodiment, the controller 90 operates to: display a first frame having a shape corresponding to a shape of the first display portion around the first display portion when displaying the first display portion in the emphasizing manner; and display a second frame having a shape corresponding to a shape of the second display portion around the second display portion when displaying the second display portion in the emphasizing manner. This allows the display portions to be emphasized more reliably.

According to the present embodiment, an automotive display device is provided, comprising: a first screen 40 disposed in front of a driver's seat; a second screen 50 disposed beside the first screen 40 in a width direction of the vehicle; an operation switch 81 for a driver of the vehicle to input an operation to the first screen 40 and the second screen 50; a first switch 82 that enables a first operation with the operation switch 81 to the first screen 40; a second switch 83 that enables a second operation with the operation switch 81 to the second screen 50; and a controller 90 that controls display on the first screen 40 and the second screen 50. The operation switch 81 is disposed between the first switch 82 and the second switch 83. The direction from the first switch 82 toward the second switch 83 is identical with the direction from the first screen 40 toward the second screen 50. The controller 90 is configured to: when the first switch 82 is operated, display a first display portion of display portions of the first screen 40 in an emphasizing manner, wherein the first display portion displays information on an operation target of the first operation; and when the second switch 83 is operated, display a second display portion of display portions of the second screen 50 in an emphasizing manner, wherein the second display portion displays information on an operation target of the second operation. Through this configuration, when the display device includes multiple screens, the screen whose display changes depending on an operation can readily be perceived.

### Description of Reference Numerals

1... Automotive display device
10... Instrument panel
20... Steering wheel
21, 22... Steering switch
30... Center console
40... First screen
41 to 45... Display portion
50... Second screen
51 to 54... Display portion
51a... Section
55... Pop-up image
60... Touch panel
71 to 77... Switch
81... Operation switch
81a to 81d... Direction input unit
82... First switch
83... Second switch
84 to 89... Switch
90... Controller
91... First controller
92... Second controller

## Claims

1. An automotive display method executed by a display device of a vehicle, the display device comprising:
a first screen disposed in front of a driver's seat;
a second screen disposed beside the first screen in a width direction of the vehicle;
an operation switch for a driver of the vehicle to input an operation to the first screen and the second screen;
a first switch that enables a first operation with the operation switch to the first screen;
a second switch that enables a second operation with the operation switch to the second screen; and
a controller that controls display on the first screen and the second screen,
wherein the operation switch is disposed between the first switch and the second switch,
wherein a direction from the first switch toward the second switch is identical with a direction from the first screen toward the second screen,
wherein the controller operates to:
when the first switch is operated, display a first display portion of display portions of the first screen in an emphasizing manner, wherein the first display portion displays information on an operation target of the first operation; and
when the second switch is operated, display a second display portion of display portions of the second screen in an emphasizing manner, wherein the second display portion displays information on an operation target of the second operation.

2. The automotive display method according to claim 1, wherein the controller operates to:
display, at a predetermined position on the second screen, a menu icon indicating a candidate for information to be displayed on the second screen; and
display the menu icon in an emphasizing manner when the second switch is operated upon display of the first display portion in the emphasizing manner.

3. The automotive display method according to claim 2, wherein the controller operates to:
display a display portion of the second screen other than the menu icon in an emphasizing manner when the second switch is operated upon display of the menu icon in the emphasizing manner; and
display the menu icon in the emphasizing manner when the second switch is operated upon display of the display portion of the second screen other than the menu icon in the emphasizing manner.

4. The automotive display method according to any one of claims 1 to 3, wherein the controller operates to display any of the display portions of the first screen in an emphasizing manner when the first switch is operated upon display of the second display portion in the emphasizing manner.

5. The automotive display method according to any one of claims 1 to 4, wherein
the operation switch has a direction input unit that allows the driver to input an arbitrary direction for selecting information to be the operation target of the first operation from information displayed on the first screen and selecting information to be the operation target of the second operation from information displayed on the second screen, and
the controller operates to display a display portion of display portions around the first display portion or the second display portion in an emphasizing manner when the direction is input to the direction input unit, wherein the display portion is displayed at a position corresponding to the input direction.

6. The automotive display method according to any one of claims 1 to 5, wherein
the display device has a touch panel to input a touch operation to the second screen, and
the controller operates to stop a process of displaying the first display portion and the second display portion in an emphasizing manner when the touch operation is input to the touch panel.

7. The automotive display method according to any one of claims 1 to 6, wherein the controller operates to stop a process of displaying the first display portion and the second display portion in an emphasizing manner when the first switch and the second switch are not operated for a predetermined time or more.

8. The automotive display method according to any one of claims 1 to 6, wherein
the controller has a function of stopping a process of displaying the first display portion and the second display portion in an emphasizing manner when the first switch and the second switch are not operated for a predetermined time or more, and
the controller operates to stop the process when the first switch and the second switch are not operated for the predetermined time or more upon the function being enabled.

9. The automotive display method according to claim 7 or 8, wherein the controller operates to display a display portion that displays information displayed in the first display portion or the second display portion in the emphasizing manner when the first switch or the second switch is operated after the process is stopped.

10. The automotive display method according to any one of claims 1 to 9, wherein the controller operates to:
store information displayed in the first display portion or the second display portion when an engine of the vehicle is stopped; and
display a display portion that displays the stored information when the engine is started after the engine is stopped.

11. The automotive display method according to any one of claims 1 to 10, wherein the controller operates to:
display a first frame around the first display portion when displaying the first display portion in the emphasizing manner;
display a second frame around the second display portion when displaying the second display portion in the emphasizing manner; and
set a color of the first switch and a color of the second switch to same colors as a color of the first frame and a color of the second frame, respectively.

12. The automotive display method according to any one of claims 1 to 11, wherein the controller operates to:
display a first icon on the first switch that corresponds to forms of the first screen and the second screen and emphasizes the first screen; and
display a second icon on the second switch that corresponds to the forms and emphasizes the second screen.

13. The automotive display method according to any one of claims 1 to 12, wherein the operation switch, the first switch, and the second switch are provided on a steering wheel of the vehicle or on a center console between the driver's seat and a front passenger seat.

14. The automotive display method according to any one of claims 1 to 13, wherein
the display device has a touch panel to input a touch operation to the second screen, and
the controller operates to:
preliminarily set a part of information displayed on the second screen so as not to accept the second operation and so as to accept an operation input from the touch panel; and
display a pop-up image on the second screen to prompt the driver to perform the operation with the touch panel when the information displayed on the second display portion is set so as not to accept the second operation upon the second operation being input.

15. The automotive display method according to any one of claims 1 to 14, wherein the controller operates to preliminarily set, as information that accepts the second operation, information displayed on the second screen that is checked by the driver more frequently than a predetermined value while driving.

16. The automotive display method according to any one of claims 1 to 15, wherein
the first display portion is any one of the display portions of the first screen,
the second display portion is any one of the display portions of the second screen, and
the controller operates to display any one of the first display portion and the second display portion in an emphasizing manner.

17. The automotive display method according to any one of claims 1 to 16, wherein the controller comprises:
a first controller that controls display of the first screen and the second screen in accordance with instructions output from the operation switch; and
a second controller different from the first controller that controls display of the first screen and the second screen in accordance with instructions output from the first switch and the second switch.

18. The automotive display method according to any one of claims 1 to 17, wherein the controller operates to:
display a first frame having a shape corresponding to a shape of the first display portion around the first display portion when displaying the first display portion in the emphasizing manner; and
display a second frame having a shape corresponding to a shape of the second display portion around the second display portion when displaying the second display portion in the emphasizing manner.

19. An automotive display device comprising:
a first screen disposed in front of a driver's seat;
a second screen disposed beside the first screen in a width direction of the vehicle;
an operation switch for a driver of the vehicle to input an operation to the first screen and the second screen;
a first switch that enables a first operation with the operation switch to the first screen;
a second switch that enables a second operation with the operation switch to the second screen; and
a controller that controls display on the first screen and the second screen,
wherein the operation switch is disposed between the first switch and the second switch,
wherein a direction from the first switch toward the second switch is identical with a direction from the first screen toward the second screen,
wherein the controller is configured to:
when the first switch is operated, display a first display portion of display portions of the first screen in an emphasizing manner, wherein the first display portion displays information on an operation target of the first operation; and
when the second switch is operated, display a second display portion of display portions of the second screen in an emphasizing manner, wherein the second display portion displays information on an operation target of the second operation.
